# EUROPÄISCHE PATENTSCHRIFT

(11) **EP 0 666 014 B1**
(45) Veröffentlichungstag und Bekanntmachung des Hinweises auf die Patenterteilung: **04.06.1997**
(21) Anmeldenummer: 95101299.6
(22) Anmeldetag: 31.01.1995
(51) Int. Cl.: A01B 11/00

(54) **Fahrbares Bodenlockerungsgerät**
Mobile soil decompacting apparatus
Appareil pour le décompactage du sol mobile

(30) Priorität: 02.02.1994 DE 4403158
(43) Veröffentlichungstag der Anmeldung: 09.08.1995
(73) Patentinhaber: WOLF-Geräte GmbH Vertriebsges . KG, D-57517 Betzdorf (DE)
(72) Erfinder: Schütz, Eberhard, D-57567 Daaden (DE)
(74) Vertreter: Koch, Günther, Dipl.-Ing.

(56) Entgegenhaltungen:
- DE-A- 3 404 675
- GB-A- 1 306 212
- US-A- 3 627 056
- US-A- 4 245 705

## Beschreibung

Die Erfindung bezieht sich auf ein fahrbares Bodenlockerungsgerät, bei dem an einem am Traktor anhängbaren Rahmen mehrere um eine horizontale, quer zur Fahrtrichtung verlaufende Achse schwenkbare, in Fahrtrichtung verlaufende Werkzeugschwingen gelagert sind, welche Werkzeugmeißel tragen und bei dem die Werkzeugschwingen über eine Antriebswelle um ihr Schwenklager auf- und niederbeweglich sind.

Derartige Bodenlockerungsgeräte werden beispielsweise zur Bearbeitung von Sportplätzen benutzt, wo stark verhärtete Bereiche mit weicheren, unbespielten Bereichen abwechseln, und eine gleichmäßige Bodenbeschaffenheit dadurch hergestellt werden soll, daß eine gleichmäßige Auflockerung des Bodens erfolgt, dem eine Verdichtung mittels geeigneter Walzen folgen kann. Ein gattungsgemäßes Bodenlockerungsgerät zeigt die DE-A- 3404675.

Ein ähnliches Bodenlockerungsgerät ist aus der EP-A-0 092 201 bekannt. Hierbei trägt der hintere Hebelarm der doppelarmigen Werkzeugschwinge einen Werkzeugträgerbalken, der in vorbestimmten Abständen nebeneinander die als Meißel ausgebildeten Werkzeuge trägt, so daß alle Werkzeuge gleichzeitig auf- und niederbewegt werden. Dabei erfolgt eine automatische Anpassung der Werkzeuge an einen wechselnden Verdichtungsgrad des Bodens und ein einheitlicher Lockerungseffekt wird dadurch bewirkt, daß gemäß dem Verdichtungsgrad die Schwingungsamplitude der Werkzeugschwinge automatisch eingestellt wird.

Ein ähnliches Gerät zeigt die US-PS 4 102 402. Hierbei ist jedem Werkzeugmeißel ein ebenfalls mit der Werkzeugschwinge in Verbindung stehende Scheibensech zugeordnet, der in Bewegungsrichtung vor und über dem Meißel in den Boden eindringt. Eine kontinuierliche Auf- und Niederbewegung der Werkzeuge ist hierbei jedoch nicht vorgesehen.

Der Erfindung liegt die Aufgabe zugrunde, ein gattungsgemäßes Bodenlockerungsgerät insbesondere zur Bearbeitung von Sportplätzen weiter derart zu verbessern, daß bei einfachem, konstruktivem Aufbau eine flächige Lockerung der Tragschicht bzw. des Bodens unter einer Rasenfläche gewährleistet wird, ohne daß hierdurch die Rasensode zerstört wird.

Gelöst wird die gestellte Aufgabe durch die im Patentanspruch 1 angegebenen Merkmale. Dadurch, daß die die Werkzeugmeißel tragenden Schwingen jeweils paarweise an den auf einer Geraden liegenden Enden eines Doppelwinkelhebels angelenkt sind, welcher um den in Fahrtrichtung verlaufenden Drehzahpfen schwenkbar antreibbar ist, wird ein Abreißen der durch die Sechscheiben vorgeschnittenen Rasensode verhindert. Es hat sich außerdem gezeigt, daß durch diese wellenförmige Bearbeitung, bei der die Wellen eines Werkzeugpaares jeweils um 180° phasenversetzt sind, ein unbeabsichtiges Aufreißen des Bodens zwischen den eingeschnittenen Rillen verhindert und der Unterbau gleichförmig in der gewünschten Weise zur weiteren Bearbeitung vorbereitet wird. Die zweckmäßigerweise mit seitlich angebrachten Lockerungsflügeln versehenen Werkzeuge heben und senken die Sode quer zur Fahrtrichtung wechselseitig.

Die Lagerung der Werkzeugträger ist flexibel über Gummilager vorgenommen, wodurch die Ab- und Auf-Drehbewegung wartungsfrei wird. Die Werkzeugträger mit den daran befestigten Werkzeugen können hierdurch seitlich ausweichen, um ein Verklemmen an Fremdkörpern zu vermeiden, die sich in und unter der Rasensode befinden. Gemäß einer weiteren Ausgestaltung sind die beweglichen Teile symmetrisch ausgebildet, so daß sich keine dynamischen Unwuchten bilden können und das Gerät auch bei hohen Hubzahlen schwingungsfrei arbeiten kann.

Gemäß einer weiteren Ausgestaltung der Erfindung ist der Tragrahmen durch einen stützrahmen abgestützt, der auf dem Boden über ein Fahrwerk abrollbar ist, das aus einer vorderen Glattwalze (vor den Werkzeugen) und einer hinteren Gitterwalze in Fahrtrichtung hinter den Werkzeugen besteht. Durch diese Walzen wird die eingestellte Eindringtiefe der Werkzeuge unabhängig vom Zugfahrzeug aufrechterhalten.

Durch die gleichmäßige Auflage der als Fahrwerk dienenden Walzen wird der spezifische Bodendruck sehr gering gehalten, und durch die schwimmende Befestigung am Zugfahrzeug werden keine Lasten auf die Hinterräder des Fahrzeugs übertragen.

Weitere zweckmäßige Ausgestaltungen der Erfindung ergeben sich aus den Unteransprüchen.

Nachstehend wird ein Ausführungsbeispiel der Erfindung anhand der Zeichnung beschrieben. In der Zeichnung zeigen:
Fig. 1 eine schematische Seitenansicht eines an einem Traktor angehängten erfindungsgemäßen Bodenlockerungsgerätes;
Fig. 2 eine Rückansicht des Bodenlockerungsgerätes gemäß Fig. 1, wobei der Übersichtlichkeit wegen verschiedene Bauteile weggelassen sind.

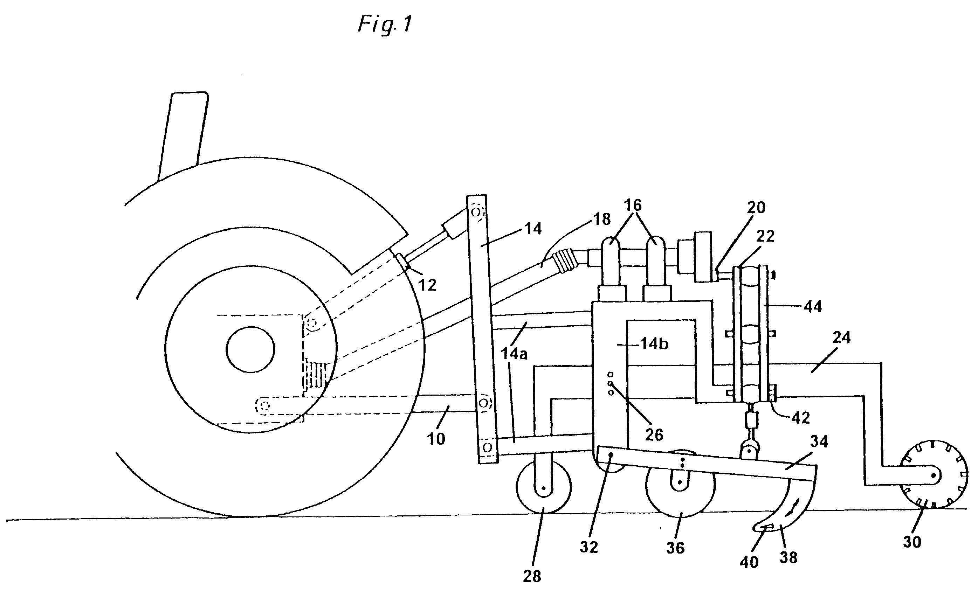

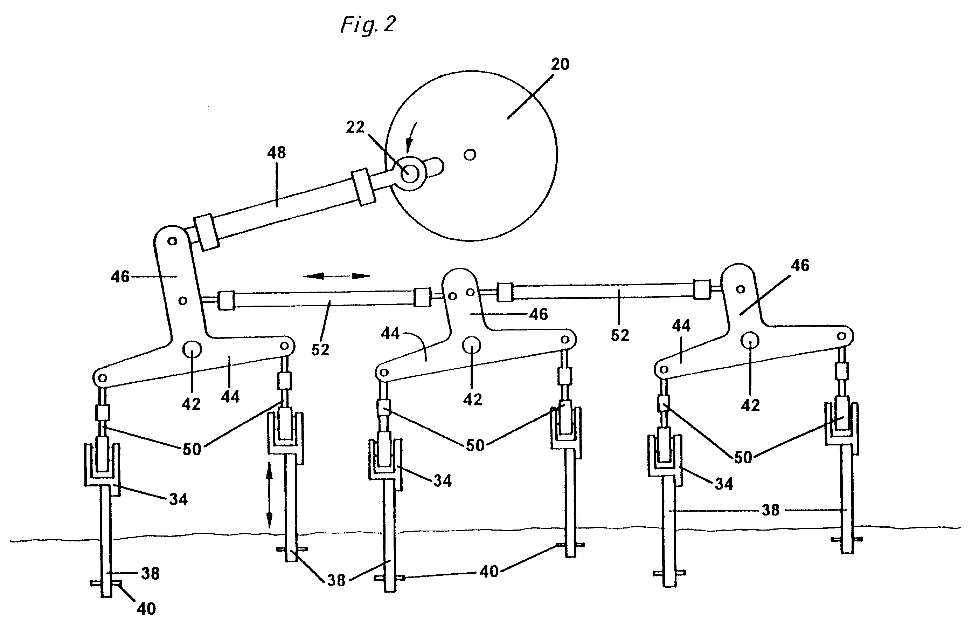

In Fig. 1 sind lediglich die in Fahrtrichtung auf der linken Seite angeordneten Werkzeugschwingen u. dgl. ersichtlich; in Verbindung mit Fig. 2 wird jedoch ersichtlich, daß seitlich nebeneinander mehrere Arbeitsgruppen angeordnet sind, deren Zahl und Anordnung die Gesamtmaschinenbreite bestimmt.

An den beiden unteren Streben 10 und der oberen Hubstrebe 12 einer Dreipunktaufhängung eines Traktors ist ein Tragrahmen 14 des Bodenlockerungsgerätes aufgehängt. Dieser Tragrahmen besitzt nach hinten weisende Streben 14a, die ein umgekehrt U-förmiges Rahmenteil 14b tragen, welches sich quer zur Fahrtrichtung erstreckt, und auf der Oberseite im Mittelteil Lager 16 für das hintere Ende der Gelenkwelle 18 des Traktors trägt. Das hintere Ende der Gelenkwelle 18 trägt eine Kurbelscheibe 20 mit einem radial vestellbaren Kurbelzapfen 22, der, wie weiter unten beschrieben wird, als Antrieb für die Werkzeuge dient.

Der Tragrahmen 14 wird von einem Stützrahmen 24 über Zapfen 26 starr, aber höhenverstellbar getragen. Gemäß dem dargestellten Ausführungsbeispiel sind mehrere Einstecklöcher für die Zapfen 26 vorgesehen, um die Höhenverstellbarkeit zu bewirken. Selbstverständlich können auch andere Stellmittel, beispielsweise Gewindespindeln o. dgl., zu diesem Zweck vorgesehen werden. Dieser Stützrahmen weist vordere und hintere, nach unten weisende Arme auf, die auf einem Fahrwerk abgestützt sind. Dieses Fahrwerk besteht aus einer vorderen Glattwalze 28, die in Fahrtrichtung vor den Werkzeugen liegt und einer hinteren Gitterwalze 30, die in Fahrtrichtung hinter den Werkzeugen liegt.

Der vordere, nach unten weisende Schenkel des Tragrahmens 14b trägt am unteren Ende ein Schwenklager 32, an dem mehrere Werkzeugschwingen 34 mit ihrem vorderen Ende angelenkt sind. Diese Werkzeugschwingen tragen im Mittelabschnitt in den Boden eindringende Sechscheiben 36 und am hinteren Ende in den Boden eindringende Werkzeuge 38 in Gestalt von Meißeln, an deren Seitenflächen Lockerungsflügel 40 angebracht sind.

Wie in Verbindung mit Fig. 2 erkennbar ist, lagert der Tragrahmen 14b an seiner Rückseite über Drehzapfen 42 mehrere Doppelwinkelhebel 44. Der Mittelarm 46 des gemäß Fig. 2 links befindlichen Doppelwinkelhebels ist schwenkbar mit einem Lenker 48 verbunden, der seinerseits am Kurbelzapfen 22 der Kurbelscheibe (20) angelenkt ist. An den beiden sich seitlich erstreckenden Armen der Doppelwinkelhebel 44 sind Antriebslenker 50 angelenkt, die ihrerseits über Gummilagerungen jeweils paarweise mit Werkzeugschwingen 34 verbunden sind. Die Mittelarme 46 der Doppelwinkelhebel 44 sind über Verbindungslenker 52 verbunden, wodurch eine synchrone Bewegung der einzelnen Werkzeugpaare zustandekommt.

Die in den Fig. 1 und 2 dargestellte Vorrrichtung arbeitet wie folgt:

Während der Fahrbewegung des Bodenlockerungsgerätes werden die Sechscheiben 36 und die Werkzeugmeißel 38 über die Werkzeugschwingen 34 durch den Kurbeltrieb 20, 22 und die Doppelwinkelhebel 44 sowie die Antriebslenker 50 in eine periodisch auf- und niedergehende Bewegung versetzt, wobei die Werkzeuge jeweils eines Paares, wie aus Fig. 2 ersichtlich, entgegengesetzt in ihrer Hubbewegung gesteuert werden. Die Eindringtiefe der Werkzeuge ist einerseits durch die Höhenverstellbarkeit zwischen den Rahmen 14 und 24 und außerdem durch Einstellung der Exzentrizität des Kurbeltriebes 20, 22 veränderbar. Die durch die Sechscheiben 36 und die Meißel 38 gebildeten, leicht aufgewölbten Rillen werden durch die nachlaufende Gitterwalze 30 geschlossen, so daß eine aufgelockerte, aber glatte Deckschicht gebildet wird. Durch die vordere Glattwalze 28 des Fahrwerks wird die eingestellte Eindringtiefe der Werkzeuge unabhängig vom Zugfahrzeug aufrechterhalten. Durch die seitlich an den Meißeln 38 angebrachten Lockerungsflügel 40 wird die Sode über die paarweise Anordnung der Werkzeuge wechselseitig gehoben und abgesenkt. Durch die schwimmende Befestigung am Zugfahrzeug und das Fahrwerk des Stützrahmens 24 werden keine Lasten auf die Hinterräder des Zugfahrzeugs übertragen.

Obgleich in Fig. 1 jeweils nur ein seitlicher Rahmenteil ersichtlich ist, ergibt sich aus dem Gesamtzusammenhang, daß die Rahmenanordnung und Lagerung wenigstens auf zwei, den Walzenenden benachbarten Seiten erfolgt, und die Rahmenanordnung sich natürlich auch quer zur Fahrtrichtung erstreckt, was in Fig. 2 der Übersichtlichkeit wegen nicht dargestellt ist.

### Bezugsziffernliste

- 10: untere Streben
- 12: Hubstrebe
- 14: Tragrahmen
- 14a: Streben
- 14b: umgek. U-förmiger Rahmenteil
- 16: Lager
- 18: Gelenkwelle
- 20: Kurbelscheibe
- 22: Kurbelzapfen
- 24: Stützrahmen
- 26: Zapfen
- 28: Glattwalze
- 30: Gitterwalze
- 32: Schwenklager
- 34: Werkzeugschwinge
- 36: Sechsscheiben
- 38: Werkzeuge (Meißel)
- 40: Lockerungsflügel
- 42: Drehzapfen
- 44: Doppelwinkelhebel
- 46: Mittelarm
- 48: Lenker
- 50: Antriebslenker
- 52: Verbindungslenker

## Patentansprüche

1. Fahrbares Bodenlockerungsgerät, bei dem an einem am Traktor anhängbaren Rahmen (14) mehrere um eine horizontale, quer zur Fahrtrichtung verlaufende Achse (32) schwenkbare, in Fahrtrichtung verlaufende Werkzeugschwingen (34) gelagert sind, welche Werkzeugmeißel (38) tragen und bei dem die Werkzeugschwingen (34) über eine Antriebswelle (18) um ihr Schwenklager (32) auf- und niederbeweglich sind,
dadurch gekennzeichnet, daß
die die Werkzeugmeißel (38) tragenden Werkzeugschwingen (34) jeweils paarweise an den auf einer Geraden liegenden Enden von Doppelwinkelhebeln (44) angelenkt sind, wobei die Doppelwinkelhebel (44) um in Fahrtrichtung verlaufende Drehzapfen (42) schwenkbar antreibbar am Rahmen (14) angelenkt sind, und daß
an den Werkzeugschwingen (34) in Fahrtrichtung vor den Werkzeugmeißeln (38) Sechscheiben (36) drehbar gelagert sind.

2. Fahrbares Bodenlockerungsgerät nach Anspruch 1,
dadurch gekennzeichnet, daß der Tragrahmen (14) von einem Stützrahmen (24) abgestützt ist, der auf dem Boden über ein Fahrwerk (28, 30) abrollbar ist.

3. Fahrbares Bodenlockerungsgerät nach Anspruch 2,
dadurch gekennzeichnet, daß der Stützrahmen (24) gegenüber dem Tragrahmen (14) höhenverstellbar (26) ist.

4. Fahrbares Bodenlockerungsgerät nach Anspruch 2,
dadurch gekennzeichnet, daß der Stützrahmen (24) eine in Fahrtrichtung vor den Werkzeugen (36, 38) befindliche Glattwalze (28) aufweist.

5. Fahrbares Bodenlockerungsgerät nach Anspruch 2,
dadurch gekennzeichnet, daß der Stützrahmen (24) eine in Fahrtrichtung hinter den Werkzeugen (36, 38) liegende Gitterwalze (30) aufweist.

6. Fahrbares Bodenlockerungsgerät nach einem der Ansprüche 1 bis 5,
dadurch gekennzeichnet, daß die Werkzeugschwinge (34) über Gummilager derart abgestützt ist, daß die Werkzeuge (36, 38) seitlich ausweichen können.

7. Fahrbares Bodenlockerungsgerät nach einem der Ansprüche 1 bis 6,
dadurch gekennzeichnet, daß die beweglichen Teile (50, 34, 36, 38) symmetrisch derart angeordnet sind, daß unter Vermeidung dynamischer Unwuchten das Gerät schwingungsfrei mit hohen Hubzahlen pro Zeiteinheit arbeiten kann.

8. Fahrbares Bodenlockerungsgerät nach einem der Ansprüche 1 bis 7,
dadurch gekennzeichnet, daß die sichelförmig ausgebildeten Werkzeugmeißel (38) mit seitlich vorstehenden Lockerungsflügeln (40) ausgerüstet sind.

9. Fahrbares Bodenlockerungsgerät nach einem der Ansprüche 1 bis 8,
dadurch gekennzeichnet, daß die Hubhöhe sämtlicher Werkzeuge (36, 38) durch Veränderung des Kurbeltriebes (20, 22) einstellbar ist.

10. Fahrbares Bodenlockerungsgerät nach einem der Ansprüche 1 bis 9,
dadurch gekennzeichnet, daß es schwimmend am Zugfahrzeug derart befestigt ist, daß die Hinterräder des Zugfahrzeuges im wesentlichen unbelastet bleiben.

11. Fahrbares Bodenlockerungsgerät nach einem der Ansprüche 1 bis 10,
dadurch gekennzeichnet, daß der Tragrahmen (14) Lager (16) für die die Kurbelscheibe (20) tragende Gelenkwelle (18) aufweist.

12. Fahrbares Bodenlockerungsgerät nach einem der Ansprüche 1 bis 11,
dadurch gekennzeichnet, daß die die Werkzeugschwingen (34) steuernden Doppelwinkelhebel (44) durch Verbindungslenker (52) synchronisiert sind, die am Mittelarm (46) dieser Hebel angreifen.

13. Fahrbares Bodenlockerungsgerät nach einem der Ansprüche 1 bis 12,
dadurch gekennzeichnet, daß der Tragrahmen an den unteren Streben (10) und der oberen Hubstrebe (12) der Dreipunktaufhängung eines Traktors anhängbar ist.

## Claims

1. Mobile soil-loosening implement, wherein there are mounted, on a frame (14) which can be hitched to the tractor, a number of tool rockers (34) which can be swivelled about a horizontal axis (32) extending transversely to the direction of travel, extend in the said direction of travel and carry cutting tools (38), and wherein the tool rockers (34) can be moved up and down about their swivel bearing (32) via a driving shaft (18),
characterised in that
the tool rockers (34) carrying the cutting tools (38) are articulatingly attached, in pairs in each case, to the ends, which lie on a straight line, of double-angle levers (44), the latter being articulatingly attached to the frame (14) so as to be drivable in such a way as to be capable of swivelling about pivot pins (42) extending in the direction of travel, and that
coulter discs (36) are rotatably mounted on the tool rockers (34) in front of the cutting tools (38), referred to the direction of travel.

2. Mobile soil-loosening implement according to claim 1,
characterised in that the carrying frame (14) is supported by a supporting frame (24) which can be rolled along on the ground via a running mechanism (28, 30).

3. Mobile soil-loosening implement according to claim 2,
characterised in that the supporting frame (24) is vertically adjustable (26) in relation to the carrying frame (14).

4. Mobile soil-loosening implement according to claim 2,
characterised in that the supporting frame (24) has a smooth roller (28) located in front of the tools (36, 38), referred to the direction of travel.

5. Mobile soil-loosening implement according to claim 2,
characterised in that the supporting frame (24) has a grid roller (30) lying behind the tools (36, 38), referred to the direction of travel.

6. Mobile soil-loosening implement according to one of claims 1 to 5,
characterised in that the tool rocker (34) is supported via rubber bearings in such a way that the tools (36, 38) are capable of lateral deflection.

7. Mobile soil-loosening implement according to one of claims 1 to 6,
characterised in that the moving parts (50, 34, 36, 38) are disposed symmetrically in such a way that the implement is able, while avoiding dynamic imbalances, to operate in a vibration-free manner when the numbers of strokes per unit of time are high.

8. Mobile soil-loosening implement according to one of claims 1 to 7,
characterised in that the cutting tools (38), which are of sickle-shaped construction, are equipped with laterally protruding loosening vanes (40).

9. Mobile soil-loosening implement according to one of claims 1 to 8,
characterised in that the stroke height of all the tools (36, 38) can be adjusted by varying the crank drive (20, 22).

10. Mobile soil-loosening implement according to one of claims 1 to 9,
characterised in that it is floatingly attached to the towing vehicle in such a way that the rear wheels of the said towing vehicle remain essentially unloaded.

11. Mobile soil-loosening implement according to one of claims 1 to 10,
characterised in that the carrying frame (14) has bearings (16) for the universal-joint shaft (18) carrying the crank disc (20).

12. Mobile soil-loosening implement according to one of claims 1 to 11,
characterised in that the double-angle levers (44) controlling the tool rockers (34) are synchronised by connecting guide rods (52) which act upon the middle arm (46) of the said levers.

13. Mobile soil-loosening implement according to one of claims 1 to 12,
characterised in that the carrying frame can be hitched to the lower struts (10) and the upper lifting strut (12) of the three-point hitching system of a tractor.

## Revendications

1. Appareil mobile pour ameublir le sol, dans lequel plusieurs bras porte-outils (34) oscillants qui s'étendent dans la direction d'avancement et portent des lames (38) d'outil, sont montés pivotants autour d'un axe (32) horizontal disposé transversalement à la direction d'avancement sur un châssis (14) qui peut être attelé à un tracteur et dans lequel les bras porte-outils (34) oscillants peuvent être déplacés vers le haut et vers le bas autour de leur palier (32) d'articulation au moyen d'un arbre d'entraînement (18), caractérisé par le fait que les bras porte-outils (34) oscillants qui portent les lames (38) d'outils sont articulés par paires sur les extrémités de leviers coudés (44) doubles situées sur une droite, les leviers coudés (44) doubles étant articulés sur le châssis (14) avec possibilité de pivotement autour d'axes (42) qui s'étendent dans la direction d'avancement et par le fait que des coutres disques (36) sont montés rotatifs sur les bras porte-outils (34) oscillants, en avant des lames (38) d'outil, dans la direction d'avancement.

2. Appareil mobile pour ameublir le sol selon la revendication 1, caractérisé par le fait que le châssis porteur (14) repose sur un châssis d'appui (24) qui peut rouler sur le sol grâce à un train roulant (28, 30).

3. Appareil mobile pour ameublir le sol selon la revendication 2, caractérisé par le fait que le châssis d'appui (24) est réglable (26) en hauteur par rapport au châssis porteur (14).

4. Appareil mobile pour ameublir le sol selon la revendication 2, caractérisé par le fait que le châssis d'appui (24) comporte un rouleau lisse (28) qui est disposé en avant des outils (36, 38), vu dans la direction d'avancement.

5. Appareil mobile pour ameublir le sol selon la revendication 2, caractérisé par le fait que le châssis d'appui (24) comporte un rouleau ajouré (30) qui est disposé derrière les outils (36, 38), vu dans la direction d'avancement.

6. Appareil mobile pour ameublir le sol selon l'une des revendications 1 à 5, caractérisé par le fait que les bras porte-outils (34) oscillants sont montés sur des plots en caoutchouc, de telle sorte que les outils (36, 38) puissent s'écarter latéralement.

7. Appareil mobile pour ameublir le sol selon l'une des revendications 1 à 6, caractérisé par le fait que les éléments mobiles (50, 34, 36, 38) sont disposés symétriquement de telle sorte qu'en évitant les balourds dynamiques, l'appareil peut travailler sans vibrations avec des nombres élevés de courses par unité de temps.

8. Appareil mobile pour ameublir le sol selon l'une des revendications 1 à 7, caractérisé par le fait que les lames d'outils (38) conformées en demi-lunes sont pourvues d'ailettes (40) d'ameublissement qui font saillie latéralement.

9. Appareil mobile pour ameublir le sol selon l'une des revendications 1 à 8, caractérisé par le fait que la hauteur de course de tous les outils (36, 38) peut être réglée par action sur le mécanisme à bielle-manivelle (20, 22).

10. Appareil mobile pour ameublir le sol selon l'une des revendications 1 à 9, caractérisé par le fait qu'il fixé flottant sur le véhicule tracteur de manière telle que les roues arrières du tracteur soient essentiellement non chargées.

11. Appareil mobile pour ameublir le sol selon l'une des revendications 1 à 10, caractérisé par le fait que le châssis porteur (14) comporte des paliers (16) pour l'arbre articulé (18) portant le disque manivelle (20).

12. Appareil mobile pour ameublir le sol selon l'une des revendications 1 à 11, caractérisé par le fait que les leviers coudés (44) doubles qui commandent les bras porte-outils (34) oscillants sont synchronisés par des bielles de liaison (52) qui agissent sur le bras médian (46) desdits leviers.

13. Appareil mobile pour ameublir le sol selon l'une des revendications 1 à 12, caractérisé par le fait que le châssis porteur peut être fixé aux longerons (10) inférieurs et au bras (12) supérieur de levage de l'attelage à à trois points de fixation d'un tracteur.
